# EUROPÄISCHE PATENTSCHRIFT

(11) **EP 3 378 829 B1**
(45) Veröffentlichungstag und Bekanntmachung des Hinweises auf die Patenterteilung: **12.01.2022**
(21) Anmeldenummer: 18160677.3
(22) Anmeldetag: 08.03.2018
(51) Int. Cl.: B67D 1/00, B67D 1/04, B67D 3/00, B67D 7/02, B67D 1/08

(54) **TANK MIT ENTLÜFTUNG**
TANK WITH VENTILATION
RÉSERVOIR À VENTILATION

(30) Priorität: 14.03.2017 DE 202017101477 U
(43) Veröffentlichungstag der Anmeldung: 26.09.2018
(73) Patentinhaber: agrotop GmbH, 93083 Obertraubling (DE)
(72) Erfinder: GRAEF, Steffen, 93083 Obertraubling (DE)
(74) Vertreter: Bittner, Bernhard

(56) Entgegenhaltungen:
- EP-A1- 2 243 744
- DE-A1- 1 657 211
- DE-A1-102014 016 558
- FR-A- 659 396
- US-A- 3 712 514
- US-A- 6 082 589
- US-A1- 2013 264 360

## Beschreibung

Die vorliegende Erfindung betrifft eine Tankanordnung mit einer Lufteinlasseinrichtung, wodurch dem Innenraum eines Tanks Luft zugeführt werden kann. So kann der Tank entlüftet und der Volumenstrom des Abflusses gesteuert werden. Aus dem Stand der Technik sind solche Geräte/ Tanks bekannt. Üblicherweise arbeiten solche Tanks mit einem Auslassventil, aus welchem das in dem Tank befindliche fließfähige Medium ausgelassen werden kann und einem zweiten Auslassventil, über welches der innerhalb des Tanks entstandene Druck abgelassen werden kann. Ein wesentlicher Nachteil aus dem Stand der Technik ist, dass ein Tank nur im gefüllten Zustand entlüftet werden kann. Ein Nachteil der aus dem Stand der Technik bekannten Anordnungen besteht darin dass diese nur mit einer begrenzten Geschwindigkeit entleerbar sind. Die Dokumente US 2013/264360, US 3 712 514, US 6 082 589 und DE 10 2014 016558 sind eine Auswahl aus dem einschlägigen Stand der Technik.

Der vorliegenden Erfindung liegt die Aufgabe zugrunde, ein Entlüftungsprinzip aufzuzeigen, durch welches ein Tank entlüftet werden kann, wobei die Entlüftung auch möglich ist, wenn sich im Tank kein fließfähiges Medium befindet.

Diese Aufgabe wird durch den unabhängigen Anspruch 1 gelöst. Vorteilhafte Ausgestaltungen der Erfindung sind Gegenstand der Unteransprüche.

Eine erfindungsgemäße Tankanordnung weist einen Tank mit einem Zulauf, um dem Tank mit einem fließfähigen Medium zu befüllen und einen Ablauf, um ein Medium aus dem Tank zu entnehmen, auf, wobei der Ablauf eine Ventileinrichtung aufweist, welche manuell über einen Hebel von einer geöffneten Stellung in eine geschlossene Stellung und/ oder umgekehrt überführbar ist und wobei der Tank eine Lufteinlasseinrichtung mit einem Lufteinlass aufweist, über welche Luft in den Tank gefördert werden kann, umso den Tank entlüften zu können.

Erfindungsgemäß ist an dem Lufteinlass eine Luftleitung anschließbar, um den Tank über die Lufteinlasseinrichtung Luft zuführen zu können. Unter der Lufteinlasseinrichtung wird im Folgenden die gesamte Einrichtung verstanden, welche dem besagten Lufteinlass dient und welche etwa auch ein Ventil aufweisen kann. Unter dem Lufteinlass wird ein Element verstanden, welches unmittelbar dem Lufteinlass dient, wie etwa im einfachsten Fall eine Öffnung oder eine Leitung.

Bevorzugt handelt es sich bei dem Zulauf und dem Ablauf um die gleiche Einrichtung. So wäre es zum Beispielspiel denkbar, dass der Zulauf mit einem Gewinde oder dergleichen ausgestaltet ist. In diesem Falle findet bevorzugt eine Befüllung des Tanks und eine Entleerung des Tanks über die gleiche Öffnung statt. Damit wäre es möglich, den Tank über den Zulauf zu befüllen und nach der Befüllung auf den Zulauf eine Ventileinrichtung aufzuschrauben, wodurch aus dem Zulauf ein Ablauf entsteht. Neben dieser Ausgestaltungsvariante sind jedoch auch andere denkbar, zum Beispiel das der Tank einen separaten Zulauf und einen separaten Ablauf aufweist.

Durch die Idee, an dem Lufteinlass eine Anschlussmöglichkeit für eine weitere Schlauchleitung zu schaffen ergibt sich die Möglichkeit, dem Tank über eben diese Schlauchleitung zusätzlich ein Medium, beispielsweise Druckluft zuzuführen. Auf diese Weise ist eine schnellere Entleerung des Tanks möglich. Daneben kann auch ein leerer Tank gespült werden, etwa durch die Zuführung von Druckluft.

Bevorzugt besteht der Tank aus Kunststoff, jedoch sind auch andere Materialien wie zum Beispiel Metall denkbar. Der Tank weist bevorzugt eine quaderförmige Gestalt auf, wobei je nach Anforderungen zum Beispiel in Bezug auf die Lagereigenschaften auch andere Formen nicht auszuschließen sind. In einer bevorzugten Ausgestaltung ist der Ablauf und/ oder die Lufteinlasseinrichtung an einer Vorderseite des Tanks angeordnet. Als Vorderseite wird dabei zum Beispiel bei einer quaderförmigen Form des Tanks eine der beiden kürzeren seitlichen Flächen, welche senkrecht zu den beiden längeren Seitenflächen stehen verstanden. An der Vorderseite des Tanks befindet sich bevorzugt für dessen einfacheren Transport ein Griff, an welchem der Tank selbst im gefüllten Zustand angehoben und transportiert werden kann. Der Griff befindet sich bevorzugt mittig der Vorderseite. Jedoch sind auch andere Positionen wie zum Beispiel mittig der dem Boden zugewandten gegenüberliegenden Seite. Neben einem festen Griff wäre es auch denkbar, dass an dem Tank flexible Träger wie zum Beispiel bei einer Tasche angebracht sind.

Bevorzugt befindet sich der Ablauf mittig an einer Unterkante der Vorderseite des Tanks. Unter Unterkante wird dabei die im Betrieb bzw. bei der Verwendung dem Boden nähere horizontale Kante verstanden. Bevorzugt befindet sich die Lufteinlasseinrichtung oberhalb des Ablaufs. Oberhalb bedeutet hier, dass sich die Lufteinlasseinrichtung möglichst nahe an der dem Boden weiter entfernten horizontalen Kante befindet. Bevorzugt ist die Lufteinlasseinrichtung diagonal oberhalb des Ablaufs angeordnet, wobei hierdurch andere Ausgestaltungen nicht ausgeschlossen werden. Dadurch, dass die Lufteinlasseinrichtung möglichst weit über der Ablaufeinrichtung angeordnet ist, kann ein größeres Tankvolumen bei gleichbleibender Grundfläche erreicht werden.

In einer bevorzugten Ausgestaltung sind die Lufteinlasseinrichtung und/oder das Auslassventil formschlüssig mit dem Tank verbunden. Ohne jegliche Art von Einschränkungen wäre auch eine kraftschlüssige Lösung denkbar. Bevorzugt sind die Lufteinlasseinrichtung und das Auslassventil austauschbar an dem Tank befestigt. Das Auslassventil ist dabei bevorzugt an den Tank über ein Gewinde abdichtend verbunden. Bevorzugt ist Lufteinlasseinrichtung in den Tank eingeschraubt. Bevorzugt weist die Lufteinlasseinrichtung ein Dichtungselement auf, welches die Öffnung im Tank für die Lufteinlasseinrichtung derartig verschließt, dass weder Luft noch ein fließfähiges Medium entweichen oder eindringen kann. Es wäre jedoch auch denkbar, dass die Lufteinlasseinrichtung nicht in den Tank eingeschraubt, sondern eingestochen wird, wobei in diesem Fall die Lufteinlasseinrichtung als Einstecheinrichtung ausgebildet ist und auch wieder ein Dichtungselement aufweist, welches die Öffnung im Tank für die Lufteinlasseinrichtung derartig verschließt, dass weder Luft noch ein fließfähiges Medium entweichen oder eindringen kann.

In einer bevorzugten Ausgestaltung sind die Lufteinlasseinrichtung und/oder das Auslassventil derart an dem Tank angeschlossen bzw. mit diesem verbunden, dass sie jederzeit ausgetauscht bzw. ganz abgenommen werden können. Somit ist es bei einem Defekt möglich, die Lufteinlasseinrichtung oder das Auslassventil zu tauschen. Auch ist es möglich bei einem nicht funktionsfähigen Tank, z.B. einem durch ein ungewolltes Loch oder einen Riss beschädigten Tank die Lufteinlasseinrichtung und/ oder das Auslassventil zu entfernen und an einem neuen Tank zu verwenden. Somit muss bei einem Defekt nicht die komplette Tankanordnung entsorgt werden.

Bevorzugt handelt es sich bei der Lufteinlasseinrichtung um eine Einwegeinrichtung. In einer bevorzugten Ausgestaltung weißt die Lufteinlasseinrichtung einen Anschluss für einen Druckluftschlauch auf. Durch diesen Anschluss kann die gesamte Tankanordnung entlüftet werden. Für den Fall, dass sich ein fließfähiges Medium in dem Tank befindet und das Auslassventil geöffnet ist, kann durch den Anschluss auch der Volumenstrom am Auslassventil verstärkt werden, indem über die Lufteinlasseinrichtung Luft in den Innenraum des Tanks gepumpt wird. Wird ein Tank im gefüllten Zustand längere Zeit Wärme/ Hitze z.B. Sonnenlicht ausgesetzt, so kann es passieren, dass das im Tank befindliche fließfähiges Medium zu verdampfen beginnt, wodurch der Druck im Inneren des Tanks steigt.

Durch eine erfindungsgemäße Tankanordnung kann dieser aufgebaute Druck über das Lufteinlassventil abgeführt werden, wodurch eine einfachere Handhabung und Lagerung ermöglicht wird, auch das Gefahrenpotenzial kann somit verringert werden. Auch ist es mit einer erfindungsgemäßen Tankanordnung möglich, bei einem leeren Tank, das heißt wenn sich kein fließfähiges Medium innerhalb des Tanks befindet, eine Entlüftung vorzunehmen. Hierzu kann über die Lufteinlasseinrichtung künstlich ein erhöhter Druck innerhalb des Tanks erzeugt werden.

In einer bevorzugten Ausgestaltung sind die Lufteinlasseinrichtung und/ oder der Ablauf einer erfindungsgemäßen Tankanordnung stufenlos regulierbar. Bevorzugt weisen die Lufteinlasseinrichtung und/oder der Ablauf einen Hebel auf, durch welchen die Stellung der Ventile gesteuert werden kann. Somit können die Ventile des Ablaufs und der Lufteinlasseinrichtung durch Betätigung des Hebels nicht nur in die zwei Endstellungen Auf und Zu überführt werden, sondern es kann auch ein beliebiger Öffnungsgrad eingestellt werden.

In der erfindungsgemäßen Ausführungsform weist die Lufteinlasseinrichtung eine Ventileinrichtung auf. Über diese Ventileinrichtung kann ein Einlassen von Luft in den Tank erlaubt oder verhindert werden. Daneben handelt es sich bevorzugt bei dieser Ventileinrichtung auch um eine regelbare Ventileinrichtung, so dass bevorzugt der Strömungsquerschnitt der über den Lufteinlass in den Tank eintretenden Luft geregelt werden kann. Bei einer bevorzugten Ausführungsform ist auch diese Ventileinrichtung aus einem Kunststoff gefertigt. Bei einer weiteren bevoruzugten Ausführungsform weist diese Ventileinrichtung einen drehbaren Körper auf, wobei durch eine Drehung dieses Körpers der Strömungsquerschnitt der in den Tank eintretenden Luft verändert werden kann. Bei einer weiteren vorteilhaften Ausführungsform weist diese Ventileinrichtung ein Verstellelement auf, um manuell eine Ventilstellung dieses Ventils ändern zu können. So kann die Ventileinrichtung einen Hebel aufweisen, um einen Ventilkörper bezüglich einer vorgegebenen Drehachse zu drehen. Bevorzugt ist der Ventilkörper bezüglich einer Achse drehbar, welche mit einer Längsrichtung eines als Lufteinlass dienenden Rohres zusammenfällt. So wäre es möglich, dass die Ventileinrichtung in ein Lufteinlassrohr integriert ist.

Bevorzugt ist diese besagte Ventileinrichtung ein integraler Bestandteil der Lufteinlasseinrichtung und kann daher auch gemeinsam mit dieser an dem Tank angeordnet werden oder von dem Tank entfernt werden.

Vorteilhaft kann die Ventileinrichtung über den daran angeordneten Hebel wie bereits zuvor erwähnt geregelt werden. Dabei kann die Ventileinrichtung eine Regelung der Strömungsquerschnittsfläche erzeugen, sodass ein bestimmter Strömungsquerschnitt eingestellt werden kann.

Darüber hinaus ist es vorteilhaft möglich, dass über den Lufteinlass der Lufteinlasseinrichtung nicht nur Luft in den Tank gefüllt beziehugnsweise gepumpt werden kann, sonder auch, dass über die Lufteinlasseinrichtung Luft aus diesem Tank abgeführt beziehungsweise abgepumpt werden kann. Somit ist es möglich, dass sämtliche sich innerhalb des Tanks befindliche Luft abgepumpt wird und somit ein Vakuum erzeugt werden kann.

Daher handelt sich bei dem Ventil beziehungsweise der Lufteinlasseinrichtung zum ein Ventil, welche beide Strömungswege, das heißt sowohl das Einströmen als auch das Ausströmen von fließfähigen Meidium beispielsweise Luft in den Tank erlaubt beziehungsweise durch einsprechende Anschlüsse auch fördert. Unter den entsprechenden Anschlüssen ist dabei beispielsweise ein Druckluftschlauch zu verstehen, welcher Luft in das Inner des Tanks befördert. Somit ist es möglich, dass ein fließfähiges Medium über die Ventileinrichtung beziehungsweise über die Lufteinlasseinrichtung in und/oder aus dem Tank gefördert werden kann.

Die Änderung der Strömungsrichtung des Ventils beziehungsweise der Lufeinlassrichtung kann dabei beispielsweise über den Hebel eingestellt beziehungsweise gesteuert werden.

Die vorliegende Anmeldung ist weiterhin auf ein Verfahren zum Befüllen eines Tanks mit einem fließfähigen Mediums und zum Entnehmen des fließfähigen Mediums aus dem Tank gerichtet, wobei der Tank einen Zulauf und einen Ablauf aufweist, über welche das fließfähige Medium in den Tank eingeleitet beziehungsweise ausgeleitet werden kann, wobei eine Ventileinrichtung an dem Ablauf manuell über einen Hebel von einer geöffneteten Stellung in eine geschlossene Stellung und/oder umgekehrt überführt werden kann. Der Tank kann über eine Lufteinlasseinrichtung mit einem Lufeinlass, über welche Luft in den Tank gefördert werden kann, entlüftet werden.

Erfindungsgemäß kann eine Luftleitung an den Lufteinlass angeschlossen werden, um dem tank über die Lufteinlasseinrichtung Luft zuführen zu können.

Bei einem bevorzugten Verfahren kann über die an dem Ablauf angeordnete Ventileinrichtung überschüssige Druckluft, welche sich beispielsweise aufgrund von äußeren oder inneren Gegebenheiten innerhlab des Tanks angestaut hat abgeführt werden kann.

Unter den äußeren Gegebenheiten sind dabei wie oben besreits beschrieben beispielsweise Sonnenlicht zu verstehen. Hinsichtlich der inneren Gegebenheiten kann es sich dabei beispielsweise um leicht verdampfliche Medien handeln, wodurch diese in einem gasförmigen Zustand ein größeres Volumen einnehmen als in einem flüssigen Zustand.

Im nachstehenden wird ein Ausführungsbeispiel der Erfindung an Hand einer Zeichnung beschrieben. Es zeigen:
- Fig. 1: die Schrägansicht einer erfindungsgemäßen Tankanordnung; und
- Fig. 2: eine Frontansicht der Vorderseite der in Fig. 1 gezeigten Tankanordnung.

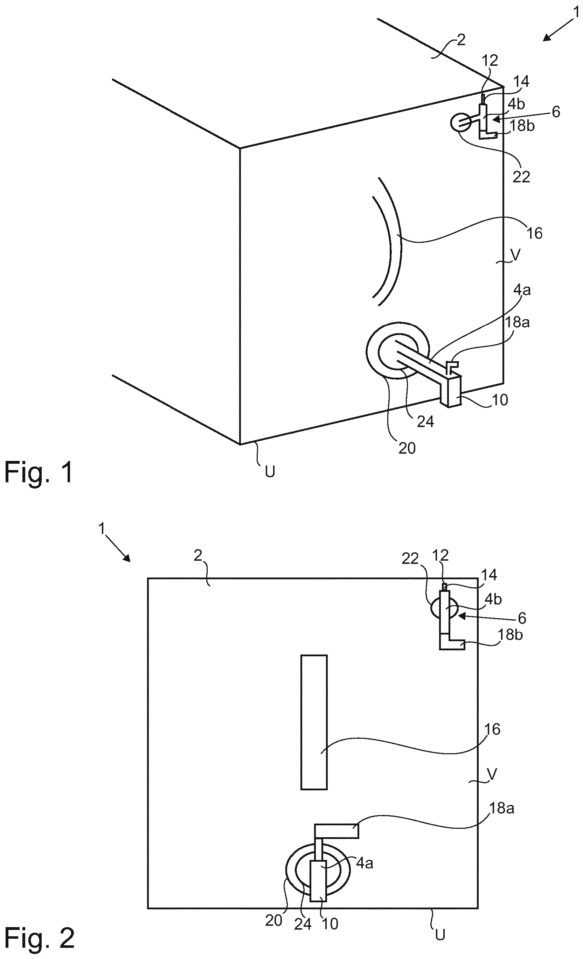

In den Fig. 1 und 2 ist eine Tankanordnung 1 mit dessen Tank 2 gezeigt. In dieser Ausgestaltungsvariante befinden sich sämtliche Einrichtungen an der Vorderseite V des Tanks (die auch in Fig. 2 wiedergegeben ist. Der Zulauf 20 über welchen dem Tank ein fließfähiges Medium zugeführt werden kann ist hier durch die Ablaufeinrichtung 10 verdeckt, bzw. bereits verschlossen. Man erkennt, dass sich der Ablauf 10 mittig an der Unterseite U des Tanks 2 befindet. Innerhalb des Ablaufs befindet sich eine Ventilanordnung 4 a welche über den Hebel 18a gesteuert werden kann. Auch ist dieser Ausgestaltungsvariante zu entnehmen, dass die gesamte Ablaufeinrichtung 10 hier mit dem Tank 2 über einen Schraubverschluss 24 verbunden ist. Über der Ablaufeinrichtung 10 ist der Griff 16 zu erkennen, über welchen die Tankanordnung transportiert werden kann. In diesem Ausführungsbeispiel ist die Lufteinlasseinrichtung 6 in der rechten oberen Ecke diagonal über dem Ablauf 10 angeordnet.

Die Lufteinlasseinrichtung 6 weist wie der Ablauf 10 eine innenliegende Ventileinrichtung 4b auf, welche über den Hebel 18b gesteuert werden kann. An der Lufteinlasseinrichtung befindet sich des weiterem ein Anschluss 14 wodurch der Lufteinlass 12 gebildet wird. An diesen Anschluss 14 kann z.B. ein hier nicht gezeigter Druckluftschlauch angeschlossen werden, wodurch dann über den Lufteinlass 12 Druckluft in das Innere des Tanks 2 gefördert werden kann. Die Dichtung 22, welche die Öffnung für die Lufteinlasseinrichtung 6 sowohl nach außen als auch nach innen abdichtet befindet sich zwischen der Außenwandung des Tanks 2 und der Lufteinlasseinrichtung 6.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Tankanordnung
- 2: Tank
- 4 a, b: Ventileinrichtung
- 6: Lufteinlasseinrichtung
- 10: Ablauf
- 12: Lufteinlass
- 14: Anschluss
- 16: Griff
- 18 a, b: Hebel
- 20: Zulauf
- 22: Dichtung
- 24: Schraubverschluss
- U: Unterkante
- V: Vorderseite

## Patentansprüche

1. Tankanordnung (1) mit einem Tank (2) mit einem Zulauf, um den Tank (2) mit einem fließfähigen Medium zu befüllen und einem Ablauf (10), um ein Medium aus dem Tank (2) zu entnehmen, wobei der Ablauf (10) eine Ventileinrichtung (4 a) aufweist, welche manuell über einen Hebel (18 a) von einer geöffneten Stellung in eine geschlossene Stellung und/ oder umgekehrt überführbar ist, wobei der Tank (2) eine Lufteinlasseinrichtung (6) mit einem Lufteinlass (12) aufweist, über welche Luft in den Tank (2) gefördert werden kann, um den Tank (2) entlüften zu können,
**dadurch gekennzeichnet, dass**
an dem Lufteinlass (12) eine Luftleitung anschließbar ist, um dem Tank (2) über die Lufteinlasseinrichtung (6) Luft zuzuführen, wobei die Lufteinlasseinrichtung eine Ventileinrichtung (4b) aufweist, wobei über die Ventileinrichtung (4b) auch überschüssige Druckluft aus dem Tank (2) abgeführt werden kann.

2. Vorrichtung (1) nach Anspruch 1,
**dadurch gekennzeichnet, dass**
der Ablauf (10) und/ oder die Lufteinlasseinrichtung (6) an einer Vorderseite (V) des Tanks (2) angeordnet sind.

3. Vorrichtung (1) nach Anspruch 2,
**dadurch gekennzeichnet, dass**
sich die Lufteinlasseinrichtung (6) oberhalb des Ablaufs (10) befindet.

4. Vorrichtung (1) nach Anspruch 2 und 3,
**dadurch gekennzeichnet, dass**
sich der Ablauf (10) mittig an einer Unterkante (U) des Tanks (2) befindet.

5. Vorrichtung (1) nach Anspruch 2 bis 4,
**dadurch gekennzeichnet, dass**
sich die Lufteinlasseinrichtung (6) diagonal über dem Ablauf (10) befindet.

6. Vorrichtung (1) nach einem der vorherigen Ansprüche,
**dadurch gekennzeichnet, dass**
die Lufteinlasseinrichtung (6) und/ oder das Auslassventil form- oder kraftschlüssig mit dem Tank (2) verbunden sind.

7. Vorrichtung (1) nach einem der vorherigen Ansprüche,
**dadurch gekennzeichnet, dass**
die Lufteinlasseinrichtung (6) und das Auslassventil austauschbar an dem Tank (2) befestigt sind.

8. Vorrichtung (1) nach einem der vorherigen Ansprüche,
**dadurch gekennzeichnet, dass**
es sich bei der Lufteinlasseinrichtung (6) um eine Einwegeinrichtung handelt.

9. Vorrichtung (1) nach Anspruch 3,
**dadurch gekennzeichnet, dass**
die Lufteinlasseinrichtung (6) einen Anschluss (14) für einen Druckluftschlauch aufweist.

10. Vorrichtung (1) nach einem der vorherigen Ansprüche,
**dadurch gekennzeichnet, dass**
die Lufteinlasseinrichtung (6) und/ oder der Ablauf (10) stufenlos regulierbar sind.

11. Vorrichtung (1) nach einem der vorherigen Ansprüche,
**dadurch gekennzeichnet, dass**
über die Ventileinrichtung (4b), insbesondere über die Lufteinlasseinrichtung (6) fließfähiges Medium in und/ oder aus dem Tank (2) gefördert werden kann.

12. Verfahren zum Befüllen eines Tanks (2) mit einem fließfähigen Medium und zum Entnehmen des fließfähigen Mediums aus dem Tank (2), wobei der Tank (2) einen Zulauf (20) und einen Ablauf (10) aufweist, über welche das fließfähige Medium in den Tank (2) eingeleitet beziehungsweise ausgeleitet werden kann, wobei eine Ventileinrichtung (4a) an dem Ablauf (10) manuell über einen Hebel (18a) von einer geöffneten Stellung in eine geschlossene Stellung und/ oder umgekehrt überführt werden kann, wobei der Tank (2) über eine Lufteinlasseinrichtung (6) mit einem Lufteinlass (12), über welche Luft in den Tank (2) gefördert werden kann, entlüftet werden kann, **dadurch gekennzeichnet, dass**
eine Luftleitung an den Lufteinlass (12) angeschlossen werden kann, um dem Tank (2) über die Lufteinlasseinrichtung (6) Luft zuführen zu können, wobei die Lufteinlasseinrichtung eine Ventileinrichtung (4b) aufweist, wobei über die Ventileinrichtung (4b) in dem Tank (2) angestaute Druckluft aus dem Tank (2) abgeführt werden kann.

## Claims

1. Tank arrangement (1) with a tank (2) with an inlet to fill the tank (2) with a flowable medium and an outlet (10) to remove a medium from the tank (2), wherein the outlet (10) comprises a valve device (4 a), which is manually transferable via a lever (18 a) from an open position to a closed position and/or vice versa, wherein the tank (2) has an air inlet device (6) with an air inlet (12) via which air can be conveyed into the tank (2) in order to be able to vent the tank (2),
**characterized in that**
an air line can be connected to the air inlet (12) in order to supply air to the tank (2) via the air inlet device (6), wherein the air inlet device comprises a valve device (4b), wherein via the valve device (4b) also redundant compressed air is able to be discharged from the tank (2).

2. Device (1) according to claim 1,
**characterized in that**
the outlet (10) and/or the air inlet device (6) are arranged on a front side (V) of the tank (2).

3. Device (1) according to claim 2,
**characterized in that**
the air inlet device (6) is above the outlet (10).

4. Device (1) according to claims 2 and 3,
**characterized in that**
the outlet (10) is located centrally on a lower edge (U) of the tank (2).

5. Device (1) according to claims 2 to 4,
**characterized in that**
the air inlet device (6) is located diagonally above the outlet (10).

6. Device (1) according to one of the preceding claims,
**characterized in that**
the air inlet device (6) and/or the outlet valve are positively or non-positively connected to the tank (2).

7. Device (1) according to one of the preceding claims,
**characterized in that**
the air inlet device (6) and the outlet valve are exchangeably attached to the tank (2).

8. Device (1) according to one of the preceding claims,
**characterized in that**
the air inlet device (6) is a one-way device.

9. Device (1) according to claim 3,
**characterized in that**
the air inlet device (6) has a connection (14) for a compressed air hose.

10. Device (1) according to one of the preceding claims,
**characterized in that**
the air inlet device (6) and/or the outlet (10) are infinitely adjustable.

11. Device (1) according to one of the preceding claims,
**characterized in that**
via the valve device (4b), in particular via the air inlet device (6) flowable medium is able to be conveyed into and/or from the tank (2).

12. A method for filling a tank (2) with a flowable medium and for removing the flowable medium from the tank (2), wherein the tank (2) has an inlet (20) and an outlet (10) via which the flowable medium is able to be introduced in the tank (2) or discharged, wherein a valve means (4a) on the outlet (10) can be transferred manually via a lever (18a) from an open position to a closed position and/or vice versa wherein the tank (2 ) can be vented via an air inlet device (6) with an air inlet (12), via which air can be conveyed into the tank (2),
**characterized in that**
an air line is able to be connected to the air inlet (12), in order to be able to supply air to the tank (2) via the air inlet device (6), wherein the air inlet device comprises a valve device (4b), wherein via the valve device (4b) compressed air being accumulated in the tank (2) is able to be discharged from the tank (2).

## Revendications

1. Agencement de réservoir (1) avec un réservoir (2) avec une amenée pour remplir le réservoir (2) avec un milieu à même de s'écouler et une décharge (10) pour extraire un milieu hors du réservoir (2), dans lequel la décharge (10) comporte un équipement de vanne (4a), lequel peut être transféré manuellement via un levier, (18a) depuis une position ouverte vers une position fermée, et/ou inversement, dans lequel le réservoir (2) comporte un équipement d'admission d'air (6) avec une admission d'air (12), via lequel de l'air peut être acheminé jusque dans le réservoir (2) pour pouvoir purger le réservoir (2),
**caractérisé en ce que**
une conduite d'air peut être raccordée à l'admission d'air (12) pour amener de l'air au réservoir (2) via l'équipement d'admission d'air (6), dans lequel l'équipement d'admission d'air (6) comporte un équipement de vanne (4b), dans lequel de l'air comprimé excédentaire peut également être évacué hors du réservoir (2) via l'équipement de vanne (4b).

2. Dispositif (1) selon la revendication 1,
**caractérisé en ce que**
la décharge (10) et/ou l'équipement d'admission d'air (6) sont agencés sur un côté avant (V) du réservoir (2).

3. Dispositif (1) selon la revendication 2,
**caractérisé en ce que**
l'équipement d'admission d'air (6) se trouve au-dessus de la décharge (10).

4. Dispositif (1) selon la revendication 2 ou 3,
**caractérisé en ce que**
la décharge (10) se trouve centrée sur un bord inférieur (U) du réservoir (2).

5. Dispositif (1) selon la revendication 2 à 4,
**caractérisé en ce que**
l'équipement d'admission d'air (6) se trouve à la diagonale par-dessus la décharge (10).

6. Dispositif (1) selon l'une des revendications précédentes,
**caractérisé en ce que**
l'équipement d'admission d'air (6) et/ou la vanne de décharge sont reliés au réservoir (2) par coopération de forme ou de force.

7. Dispositif (1) selon l'une des revendications précédentes,
**caractérisé en ce que**
l'équipement d'admission d'air (6) et la vanne de décharge sont fixés de façon interchangeable sur le réservoir (2).

8. Dispositif (1) selon l'une des revendications précédentes,
**caractérisé en ce que**
l'équipement d'admission d'air (6) est un équipement à voie unique.

9. Dispositif (1) selon la revendication 3,
**caractérisé en ce que**
l'équipement d'admission d'air (6) comporte un raccord (14) pour un tuyau à air comprimé.

10. Dispositif (1) selon l'une des revendications précédentes,
**caractérisé en ce que**
l'équipement d'admission d'air (6) et/ou la décharge (10) peuvent être régulés en continu.

11. Dispositif (1) selon l'une des revendications précédentes,
**caractérisé en ce que**
un milieu à même de s'écouler peut être acheminé dans le et/ou hors du réservoir (2) via l'équipement de vanne (4b), en particulier via l'équipement d'admission d'air (6).

12. Procédé de remplissage d'un réservoir (2) avec un milieu à même de s'écouler et d'extraction du milieu à même de s'écouler hors du réservoir (2), dans lequel le réservoir (2) comporte une amenée (20) et une décharge (10) via lesquelles le milieu à même de s'écouler peut être admis dans le ou évacué du réservoir (2), dans lequel un équipement de vanne (4a) au niveau de la décharge (10) peut être transféré manuellement via un levier (18a), depuis une position ouverte vers une position fermée, et/ou inversement dans lequel le réservoir (2) peut être purgé via un équipement d'admission d'air (6), avec une admission d'air (12) via lequel de l'air peut être acheminé jusque dans le réservoir (2),
**caractérisé en ce que**
une conduite d'air peut être raccordée à l'admission d'air (12) pour pouvoir amener de l'air au réservoir (2) via l'équipement d'admission d'air (6), dans lequel l'équipement d'admission d'air comporte un équipement de vanne (4b), dans lequel de l'air comprimé accumulé dans le réservoir (2) peut être évacué hors du réservoir (2) via l'équipement de vanne (4b).
